# FASCICULE DE BREVET EUROPEEN

(11) **EP 2 374 579 B1**
(45) Date de publication et mention de la délivrance du brevet: **22.08.2012**
(21) Numéro de dépôt: 10003752.2
(22) Date de dépôt: 08.04.2010
(51) Int. Cl.: B25G 3/24, B25D 3/00

(54) **Ciseau à bois et lame pour ciseau à bois**
Meissel für Holz und Klinge für Meissel
Wood chisel and blade for wood chisel

(43) Date de publication de la demande: 12.10.2011
(73) Titulaire: Samvaz S.A., 1618 Châtel-St-Denis (CH)
(72) Inventeur: Derivaz, François, 1618 Châtel-St-Denis (CH)
(74) Mandataire: Micheli & Cie SA

(56) Documents cités:
- WO-A1-98/21013
- GB-A- 295 832
- GB-A- 1 586 984
- US-A1- 2008 189 957

## Description

La présente invention a pour objet un outil à lame amovible, notamment un ciseau à bois et une lame pour un tel outil.

On connaît des ciseaux à bois dont la lame est inamovible. Il existe également des ciseaux à bois comprenant une lame amovible, qui peut ainsi être changée en cas d'usure prononcée ou pour varier les types de lame, par example, WO 9221013. Cependant, ces outils à lame amovibles nécessitent souvent le recours à un outil pour le démontage et le montage de la lame.

Le but de la présente invention est de réaliser un outil, notamment un ciseau à bois, dont la lame est amovible, qui permette un changement aisé et rapide de la lame, sans recours à un outil auxiliaire pour le montage ou le démontage de la lame, tout en garantissant un maintien sûr de la lame une fois celle-ci fixée audit outil. La présente invention a également pour but la réalisation d'une lame amovible destinée à équiper un outil, notamment un ciseau à bois.

La présente invention a pour objet un outil, notamment ciseau à bois, comprenant un premier profilé, un second profilé et une lame amovible caractérisé par le fait que le second profilé est chassé dans le premier de sorte que la lame amovible puisse être insérée entre lesdits premier et second profilés et y être maintenu par friction.

La présente invention a également pour objet une lame amovible destinée à équiper un outil notamment un ciseau à bois selon l'invention.

Des caractéristiques supplémentaires de l'invention sont décrites dans les revendications dépendantes.

Les dessins annexés illustrent schématiquement et à titre d'exemple plusieurs formes d'exécution d'un outil, notamment un ciseau à bois, à lame amovible ainsi que ladite lame amovible selon l'invention.

Les figures 1a et 1b illustrent un ciseau à bois selon une première forme d'exécution de l'invention :
■ La figure 1a est une vue des éléments constituant ledit ciseau à bois partiellement assemblés,
■ La figure 1b est une vue des éléments constituant ledit ciseau à bois entièrement assemblés.

Les figures 2a, 2b et 2c illustrent le premier profilé d'un ciseau à bois selon une seconde forme d'exécution de l'invention :
■ La figure 2a est une vue de dessus dudit premier profilé,
■ La figure 2b est une vue de côté dudit premier profilé,
■ La figure 2c est une vue en coupe selon l'axe II-II du premier profilé illustré à la figure 2a.

Les figures 3a et 3b illustrent l'âme d'un ciseau à bois selon la seconde forme d'exécution de l'invention :
■ La figure 3a est une vue de dessus de ladite âme,
■ La figure 3b est une vue de côté de ladite âme.

Les figures 4a, 4b et 4c illustrent l'élément bloqueur d'un ciseau à bois selon la seconde forme d'exécution de l'invention :
■ La figure 4a est une vue de dessus dudit élément bloqueur,
■ La figure 4b est une vue de côté dudit élément bloqueur,
■ La figure 4c est une vue en coupe selon l'axe IV-IV du élément bloqueur illustré à la figure 4a.

Les figures 5a et 5b illustrent l'élément coulissant d'un ciseau à bois selon la seconde forme d'exécution de l'invention :
■ La figure 5a est une vue de dessus dudit élément coulissant,
■ La figure 5b est une vue de côté dudit élément coulissant.

La figure 6a illustre la lame amovible d'un ciseau à bois selon la seconde forme d'exécution de l'invention.

La figure 6b est une vue de profil de la lame illustrée à la figure 6a.

La figure 7 illustre un ciseau à bois selon la seconde forme d'exécution de l'invention où l'élément coulissant est dans une première position fermée.

La figure 8 illustre un ciseau à bois selon la seconde forme d'exécution de l'invention où l'élément coulissant est dans une seconde position ouverte.

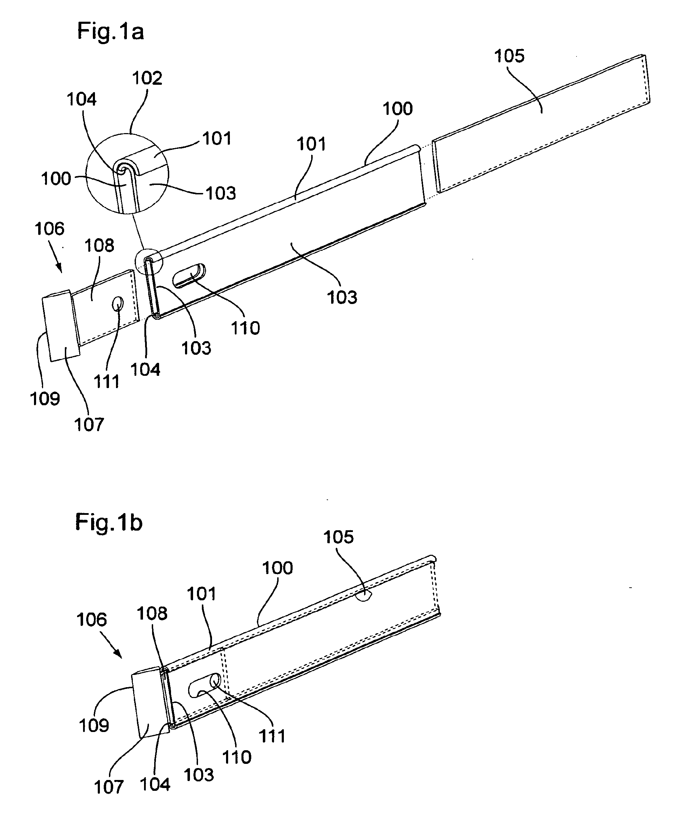

Dans la première forme d'exécution illustrée aux figures 1 a et 1 b, l'outil à lame amovible selon l'invention est un ciseau à bois. Ledit ciseau à bois comprend un premier profilé 100 ayant la forme d'une plaque essentiellement rectangulaire dont les bords 101 sont recourbés comme illustré dans l'agrandissement 102 de la figure 1 a.

Selon cette première forme d'exécution, le ciseau à bois selon l'invention comprend encore un second profilé 103 ayant la forme d'une plaque essentiellement rectangulaire dont les bords 104 sont recourbés comme illustré dans l'agrandissement 102 de la figure 1 a. Le second profilé 103 est conformé de manière à pouvoir être inséré dans le premier profilé 100 et sa longueur est sensiblement égale à celle du premier profilé 100.

De préférence, le ciseau à bois selon l'invention comporte encore une âme 105 ayant la forme d'une plaque essentiellement rectangulaire et destinée à être insérée entre les premier et second profilés 100, 103. L'âme 105 sert de renfort au ciseau à bois selon l'invention améliorant ainsi la rigidité de l'outil.

Le ciseau à bois selon l'invention comporte encore une lame amovible 106 formée d'un plateau de coupe 107 solidaire d'un plateau de fixation 108. Le plateau de coupe 107 présente à son extrémité libre une arête de coupe 109. La taille et la forme du plateau de fixation 108 sont telles que celui-ci peut être enchâssé à force entre les premier et second profilés, fixant ainsi la lame amovible au ciseau à bois selon l'invention. La taille du plateau de coupe et l'angle de l'arête de coupe peuvent varier en fonction du type de lame.

De préférence, l'âme est sensiblement plus courte que les premier et second profilés 100, 103 comme illustré sur la figure 1b, pour permettre l'enchâssement du plateau de fixation 108 de la lame amovible 106 entre les premier et second profilés 100, 103.

Pour retirer la lame amovible 106, il suffit de tirer celle-ci par le plateau de coupe hors des premier et second profilés. De préférence, les premier et second profilés comprennent chacun, à leur extrémité recevant la lame amovible, une première ouverture oblongue 110. La lame amovible 106 comprend quant à elle sur le plateau de fixation 108 un trou 111. Les premières ouvertures oblongues 110 et le trou 111 sont tels que lorsque la lame amovible 106 est insérée entre les premier et second profilés 100, 103 le trou 111 est visible par les ouvertures oblongues 110 comme illustré sur la figure 1 b. Ceci permet notamment de retirer facilement la lame amovible 106 du ciseau à bois.

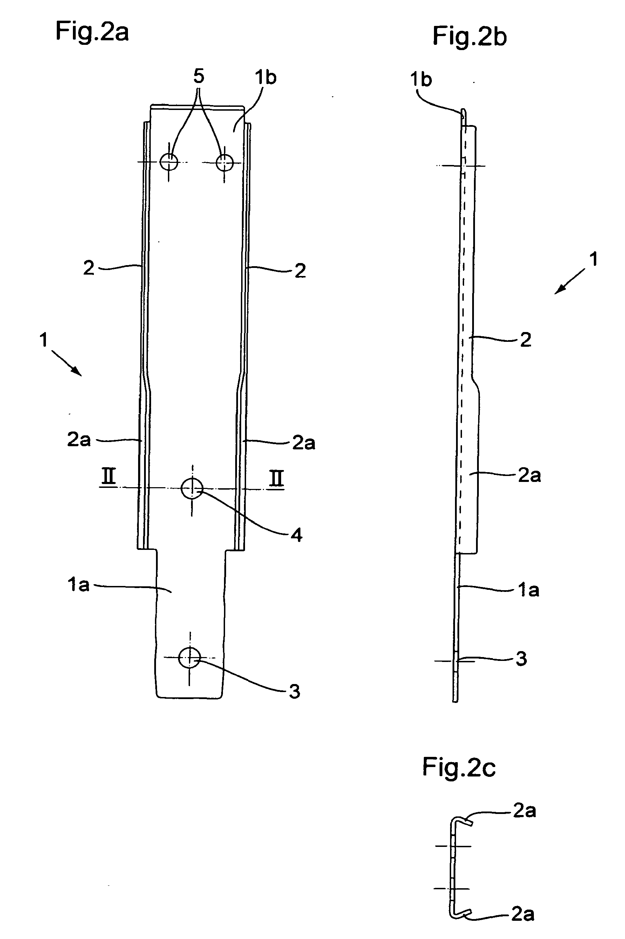

Dans la seconde forme d'exécution illustrée aux figures 2 à 8, l'outil à lame amovible selon l'invention est également un ciseau à bois. Toute comme dans la première forme d'exécution, ledit ciseau à bois comprend un premier profilé 1 illustré à la figure 2a et ayant la forme d'une plaque essentiellement rectangulaire. Une première extrémité 1 a du premier profilé 1 est conformée pour pouvoir s'insérer et être retenue dans un manche (non illustré) du ciseau à bois.

Comme illustré sur les figures 2a et 2c, le premier profilé 1 présente des bords recourbés 2 sur toute sa longueur excepté à sa première extrémité 1 a.

Le premier profilé 1 comprend en outre différentes ouvertures dont le rôle sera détaillé dans la suite. Un premier trou 3 est réalisé dans le premier profilé 1 à sa première extrémité 1 a. Le premier profilé 1 comprend encore un second trou 4 situé entre ses bords recourbés 2. Enfin, le premier profilé 1 comporte encore deux trous de positionnement 5 à sa deuxième extrémité 1 b.

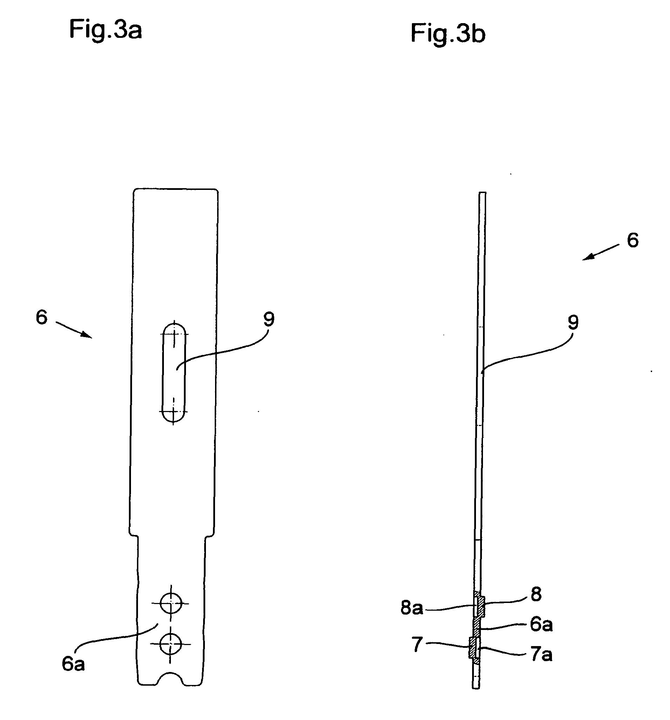

Le ciseau à bois selon la seconde forme d'exécution de l'invention comprend une âme 6 illustrée à la figure 3a et ayant la forme d'une plaque essentiellement rectangulaire. L'âme 6 est conformée de manière à pouvoir être glissée entre les bords recourbés 2 du premier profilé 1. L'âme 6 présente également une extrémité 6a conformée en taille et en forme à la première extrémité 1 a du premier profilé 1 et destinée à être insérée et retenue dans le manche du ciseau à bois. L'âme 6 sert de renfort au ciseau à bois selon l'invention.

L'âme 6 comprend à son extrémité 6a sur une première face une première protubérance 7 destinée à coopérer avec le premier trou 3 du premier profilé 1 pour garantir un positionnement et un maintien adéquat de l'âme 6 par rapport au premier profilé 1. L'âme 6 comprend encore, toujours à son extrémité 6a, une seconde protubérance 8. Comme illustré sur la figure 3b, cette seconde protubérance 8 est situé sur la deuxième face (opposée à la première) de l'âme 6 et pointe donc dans une direction opposée à celle de la première protubérance 7. De plus, toujours en référence à la figure 3b, l'âme 6 présente des premier et second évidements 7a, 8a correspondant respectivement aux première et seconde protubérances 7, 8. Le premier évidement 7a et la seconde protubérance 8 sont situés sur une même seconde face de l'âme 6. De même, le second évidement 8a et la première protubérance 7 sont situés sur une même face de l'âme, opposée à la seconde.

L'âme 6 présente encore une ouverture oblongue 9 s'étendant parallèlement aux plus longs côtés de ladite âme 6.

Dans cette seconde forme d'exécution, le second profilé est composé de deux éléments : un élément bloqueur 10 et un élément coulissant 14.

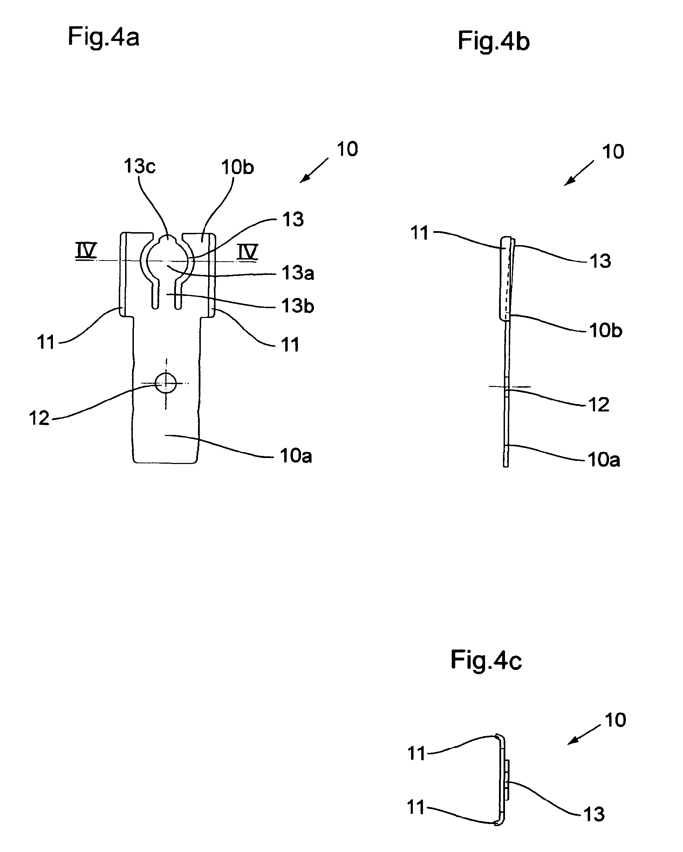

L'élément bloqueur 10 illustré à la figure 4a a une forme essentiellement rectangulaire. L'élément bloqueur 10 comprend une première portion 10a conformée en taille et en forme à la première extrémité 1 a du premier profilé 1 et à la première extrémité 6a de l'âme 6 et destinée également à être insérée et retenue dans le manche du ciseau à bois. La seconde portion 10b de l'élément bloqueur 10 comprend des rebords latéraux 11 illustrés aux figures 4b et 4c. La seconde portion 10b et les rebords latéraux 11 sont conformés de sorte que l'élément bloqueur 10 puisse être inséré dans le premier profilé 1 et que l'âme 6 soit retenue entre ledit premier profilé 1 et l'élément bloqueur 10 par l'action conjuguée d'enchâssement des bords recourbés 2 du premier profilé 1 et des rebords latéraux 11.

De plus, l'élément bloqueur 10 comprend sur sa première portion 10a un troisième trou 12 destiné à coopérer avec la seconde protubérance 8 de l'âme 6 afin de garantir le positionnement adéquat de l'élément bloqueur 10 par rapport à l'âme 6.

L'élément bloqueur 10 comprend encore une languette 13 découpée dans sa seconde portion 10b. Ladite languette 13 est conformée de manière à présenter une certaine élasticité à une pression selon un axe perpendiculaire à l'axe longitudinal de l'élément bloqueur 10. De préférence, la languette 13 présente une portion essentiellement circulaire 13a offrant une zone d'appui adéquate pour l'utilisateur et solidaire de l'élément bloqueur 10 par un bras 13b. De préférence également, la languette 13 présente à son extrémité libre un doigt 13c dont la fonction sera décrite plus bas.

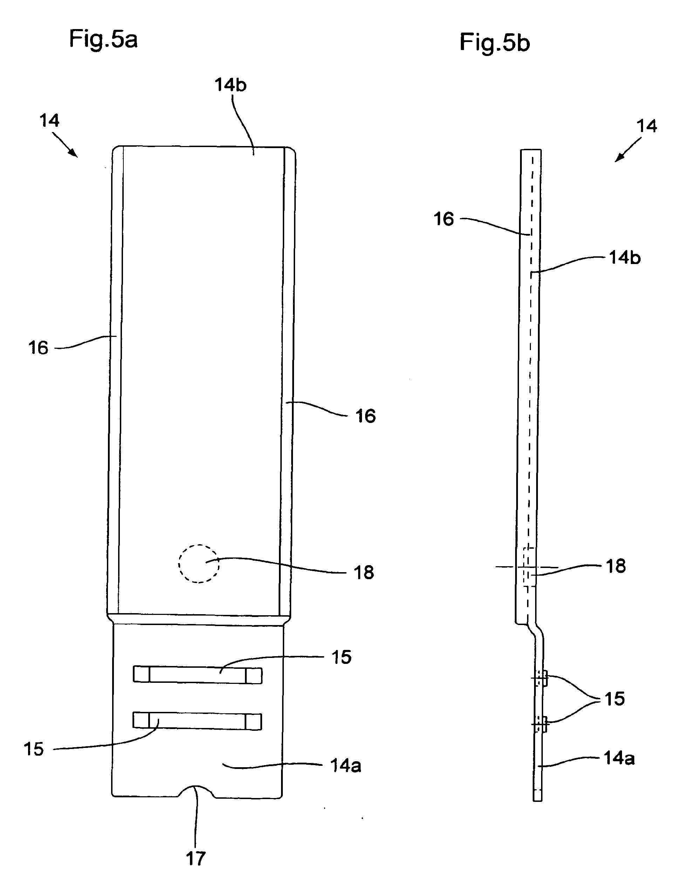

Le ciseau à bois selon l'invention comprend encore un élément coulissant 14 illustré aux figures 5a et 5b et ayant la forme d'une plaque essentiellement rectangulaire. L'élément coulissant 14 comprend une première portion 14a présentant de préférence deux saillies 15 destinées à faciliter la manipulation de l'élément coulissant 14 par l'utilisateur. L'extrémité de cette première portion 14a de l'élément coulissant 14 présente une découpe 17 destinée à coopérer avec le doigt 13c de la languette 13 de l'élément bloqueur 10.

La seconde portion 14b de l'élément coulissant 14 présente des rebords latéraux 16 s'étendant perpendiculairement à l'axe longitudinal de l'élément coulissant du côté opposé aux saillies 15. Toujours sur la face opposée à celle comportant les saillies 15, l'élément coulissant comporte une butée 18 destinée à coulisser dans l'ouverture oblongue 9 de l'âme 6.

Les rebords latéraux 16 de l'élément coulissant 14 sont conformés de manière à ce que ledit élément coulissant 14 puisse se déplacer dans le premier profilé 1, lesdits rebords latéraux coulissant entre les bords recourbés 2 du premier profilé 1 et l'âme 6.

Le montage et le fonctionnement du ciseau à bois selon cette seconde forme d'exécution vont maintenant être décrits en détail. L'âme 6 est insérée dans le premier profilé 1, son positionnement étant garanti par l'enchâssement de la première protubérance 7 de l'âme 6 dans le premier trou 3 du premier profilé 1. L'élément bloqueur 10 est ensuite inséré dans le premier profilé 1. Ledit élément bloqueur est correctement positionné lorsque la seconde protubérance 8 de l'âme 6 est correctement chassée dans le troisième trou 12 de l'élément bloqueur. De part la forme du premier profilé 1, de l'âme 6 et de l'élément bloqueur 10, ce dernier ne peut être extrait du premier profilé 1 qu'en le déplaçant selon l'axe longitudinal du premier profilé. En particulier, ledit élément bloqueur ne peut pas être extrait verticalement du premier profilé 1. Ainsi, une fois dans leur position de service, l'élément bloqueur 10 est chassé dans le premier profilé 1 et bloque également l'âme 6 dans ledit premier profilé 1.

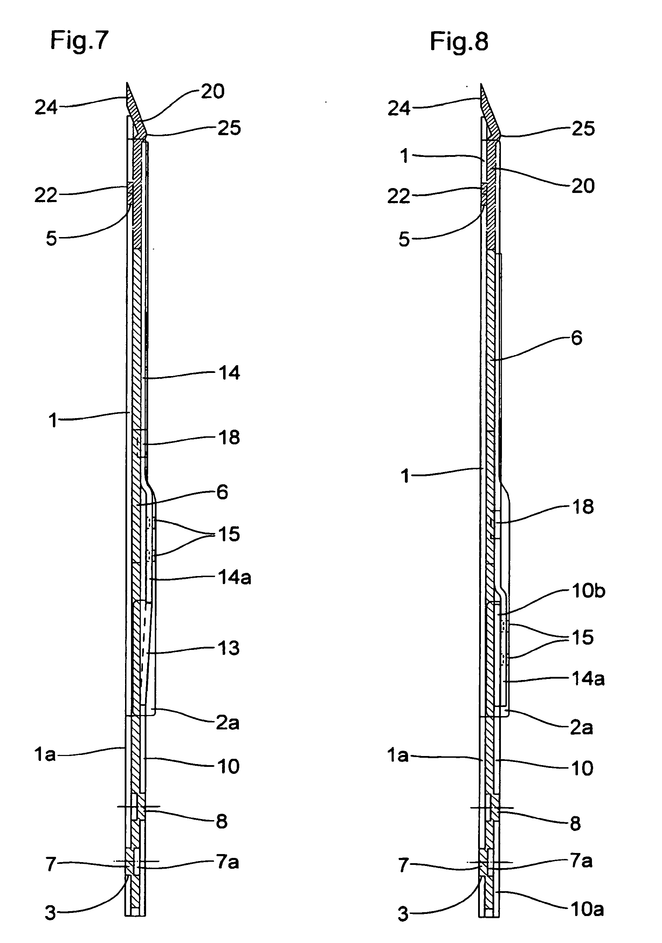

La taille de l'âme 6 est telle que, une fois le premier profilé 1, l'âme 6 et l'élément bloqueur 10 dans leur position de service, les trous de positionnement 5 ne sont pas recouvert par l'âme et sont accessibles à l'utilisateur, comme illustré sur la figure 8.

L'élément coulissant 14 est inséré dans le premier profilé 1 de manière à ce que les rebords latéraux 16 dudit élément coulissant 14 enchâssent l'âme 6. De part la forme du premier profilé 1 et de l'élément coulissant 14, ce dernier ne peut pas être extrait du premier profilé de manière verticale. Comme pour l'élément bloqueur 10, l'élément coulissant 14 peut être uniquement déplacé latéralement selon l'axe longitudinal du premier profilé 1.

Les déplacements de l'élément coulissant 14 par rapport au premier profilé 1 sont limités par la course de la butée 18 dans l'ouverture oblongue 9 de l'âme 6. De plus, en position fermée, le doigt 13c de la languette 13 de l'élément bloqueur 10 coopère avec la découpe 17 de l'élément coulissant 14 pour bloquer celui-ci et l'empêcher de coulisser plus avant par rapport au premier profilé 1. Cette position fermée est illustrée à la figure 7. La taille de l'élément coulissant 14 est telle que, dans cette position fermée, l'élément coulissant recouvre les trous de positionnement 5 du premier profilé 1, ceux-ci étant alors inaccessibles pour l'utilisateur.

Pour déplacer, l'élément coulissant 14 dans sa position ouverte, l'utilisateur doit alors presser sur la languette 13, via sa portion circulaire 13a, de manière à dégager le doigt 13c de la découpe 17. Tout en maintenant la pression sur la languette 13, l'utilisateur peut alors faire coulisser l'élément coulissant 14 pardessus l'élément bloqueur 10, découvrant ainsi les trous de positionnement 5 du premier profilé 1. La course de l'élément coulissant 14 est limitée par la butée 18 coulissant dans l'ouverture oblongue 9. L'élément bloqueur 10 et l'élément coulissant 14 sont conformés de manière à ce que ce dernier puisse coulisser pardessus le premier. Cette position ouverte est illustrée à la figure 8.

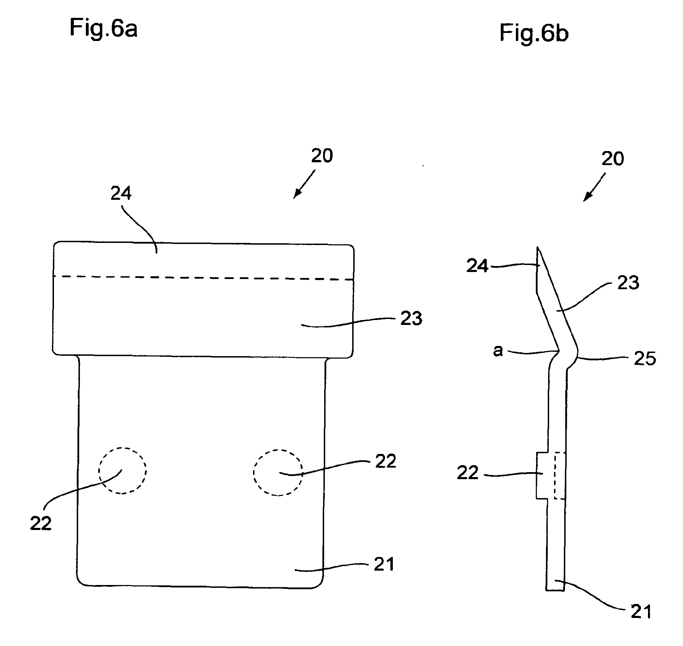

Le ciseau à bois selon la seconde forme d'exécution de l'invention comprend encore une lame amovible 20 illustrée à la figure 6a. La lame amovible 20 comprend un plateau de fixation 21 présentant des moyens de retenue ayant par exemple la forme d'un premier et d'un second ergots 22 destinés à coopérer avec les trous de positionnement 5 du premier profilé 1. La taille et la forme du plateau de fixation sont telles que celui-ci peut être inséré dans le premier profilé 1 et entre ledit profilé 1 et l'élément coulissant 14.

La lame amovible 20 comprend encore un plateau de coupe 23 solidaire du plateau de fixation 21. L'extrémité libre du plateau de coupe 23 présente une arête de coupe 24. La taille du plateau de coupe et l'angle de l'arête de coupe peuvent varier en fonction du type de lame.

Lorsque l'élément coulissant 14 est en position ouverte, la lame amovible 20 est placée dans le premier profilé 1. Le positionnement adéquat de la lame 20 est garanti par l'encliquetage des premier et second ergots 22 dans les trous de positionnement 5 du premier profilé 1. Pour assurer la fixation de la lame amovible 20 au ciseau à bois selon l'invention, l'utilisateur doit maintenant déplacer l'élément coulissant 14 dans sa position fermée en le faisant coulisser par rapport au premier profilé 1. Une fois l'élément coulissant dans sa position fermée, la plaque de fixation 21 de la lame amovible 20 est complètement recouverte par l'élément coulissant 14, celui-ci maintient donc la lame amovible 20 solidaire du ciseau à bois selon l'invention.

La présente forme d'exécution a été décrite à titre d'exemple uniquement. En particulier, la languette 13 pourrait être remplacé par toute force élastique appropriée. De même, les différents moyens de positionnement, comme les protubérances, les évidements, les butées pourraient être remplacés par tout autre moyen de positionnement approprié.

L'angle a entre le plateau de coupe 23 et le plateau de fixation 21 de la lame amovible peut varier en fonction du type de lame. Cependant, le plateau de coupe 23 est ajusté par rapport au plateau de fixation 21 de manière à former un renflement 25 conformée de sorte que les éventuels copeaux de matériaux enlevés lors de l'utilisation du ciseau à bois selon l'invention ne puisse pas venir se glisser entre l'élément coulissant 14 et la lame amovible 20. Cette variante de la lame amovible peut également être appliquée à une lame amovible destinée à équiper un ciseau à bois selon la première forme d'exécution. Les âmes 105, 6 décrites dans les deux formes d'exécution ci-dessus sont dans les deux cas optionnelles.

## Revendications

1. Outil, notamment ciseau à bois, comprenant un premier profilé (100 ; 1), un second profilé (103 ; 10, 14) et une lame amovible (106 ; 20) **caractérisé par le fait que** le second profilé (103 ; 10, 14) est chassé dans le premier de sorte que la lame amovible puisse être insérée entre lesdits premier et second profilés (100 ; 1 ; 103 ; 10, 14) et y être maintenu par friction.

2. Outil selon la revendication 1, **caractérisé par le fait qu'**il comprend encore une âme (6) positionnée entre les premier et second profilés (100 ; 1 ; 103 ; 10, 14).

3. Outil selon l'une des revendications précédentes, **caractérisé par le fait que** le premier et le second profilé (100, 103) comprennent une ouverture oblongue (110) coopérant avec un trou (111) pratiqué dans la lame amovible (106) pour permettre de retirer ladite lame amovible (106) des premier et second profilés (100, 103).

4. Outil selon l'une des revendications 1 ou 2, **caractérisé par le fait que** le second profilé comprend un élément coulissant (14) par rapport au premier profilé pouvant être déplacé entre une première position ouverte dans laquelle la lame amovible (20) peut être placée sur le premier profilé (1) et une position fermée dans laquelle la lame amovible (20) est maintenue entre le premier profilé (1) et l'élément coulissant (14).

5. Outil selon la revendication 4, **caractérisé par le fait que** le second profilé comprend encore des moyens de blocage (14) manipulables par un utilisateur pour bloquer l'élément coulissant dans sa position fermée.

6. Outil selon l'une des revendications 4 et 5, **caractérisé par le fait que** le premier profilé comprend des premiers moyens de retenue (5) coopérant avec des seconds moyens de retenue (22) présents sur la lame amovible (20) pour positionner la lame amovible (20) sur le premier profilé lorsque l'élément coulissant (14) du second profilé est dans sa position ouverte.

7. Lame amovible (106 ; 20) destinée à équiper un outil, notamment un ciseau à bois, selon l'une des revendications 1 à 6.

8. Lame amovible (106 ; 20) selon la revendication 7, **caractérisée par le fait qu'**elle comprend un renflement (25) conformé pour empêcher tout copeau de matériau de pénétrer entre ladite lame amovible (20) et le premier et/ou le second profilé.

## Claims

1. Tool, in particular a wood chisel, comprising a first profiled part (100; 1), a second profiled part (103; 10, 14) and a removable blade (106; 20), **characterised in that** the second profiled part (103; 10, 14) is pushed into the first profiled part such that the removable blade can be inserted between said first and second profiled parts (100; 1; 103; 10, 14) and be held therein by friction.

2. Tool as claimed in Claim 1, **characterised in that** it further comprises a core (6) positioned between the first and second profiled parts (100; 1; 103; 10, 14).

3. Tool as claimed in any one of the preceding Claims, **characterised in that** the first and second profiled parts (100, 103) comprise an oblong opening (110) co-operating with a hole (111) produced in the removable blade (106) in order to enable said removable blade (106) to be removed from the first and second profiled parts (100, 103).

4. Tool as claimed in any one of Claims 1 or 2, **characterised in that** the second profiled part comprises a sliding element (14) which slides with respect to the first profiled part and can be displaced between a first open position in which the removable blade (20) can be placed on the first profiled part (1) and a closed position in which the removable blade (20) is held between the first profiled part (1) and the sliding element (14).

5. Tool as claimed in Claim 4, **characterised in that** the second profiled part further comprises locking means (10) which can be operated by a user to lock the sliding element in its closed position.

6. Tool as claimed in any one of Claims 4 and 5, **characterised in that** the first profiled part comprises first retaining means (5) co-operating with second retaining means (22) provided on the removable blade (20) in order to position the removable blade (20) on the first profiled part when the sliding element (14) of the second profiled part is in its open position.

7. Removable blade (106; 20) intended to be fitted to a tool, in particular a wood chisel, as claimed in any one of Claims 1 to 6.

8. Removable blade (106; 20) as claimed in Claim 7, **characterised in that** it comprises a shoulder (25) shaped to prevent any material shavings from entering between said removable blade (20) and the first and/or second profiled part(s).

## Patentansprüche

1. Werkzeug, insbesondere Stemmeisen, das ein erstes Profilteil (100; 1), ein zweites Profilteil (103; 10, 14) und eine herausnehmbare Klinge (106; 20) umfasst, **dadurch gekennzeichnet, dass** das zweite Profilteil (103; 10, 14) in das erste getrieben wird, so dass die herausnehmbare Klinge zwischen dem ersten und dem zweiten Profilteil (100; 1; 103; 10, 14) eingesetzt werden kann und dort durch Reibung gehalten wird.

2. Werkzeug nach Anspruch 1, **dadurch gekennzeichnet, dass** es außerdem einen Kern (6) umfasst, der zwischen dem ersten und dem zweiten Profilteil (100; 1; 103; 10, 14) positioniert ist.

3. Werkzeug nach einem der vorhergehenden Ansprüche, **dadurch gekennzeichnet, dass** das erste und das zweite Profilteil (100, 103) eine längliche Öffnung (110) umfassen, die mit einem Loch (111), das in der herausnehmbaren Klinge (106) hergestellt wurde, zusammenwirkt, um das Zurückziehen der herausnehmbaren Klinge (106) in das erste und das zweite Profilteil (100, 103) zu ermöglichen.

4. Werkzeug nach einem der Ansprüche 1 oder 2, **dadurch gekennzeichnet, dass** das zweite Profilteil ein in Bezug auf das erste Profilteil verschiebbares Element (14) umfasst, das zwischen einer ersten geöffneten Position, in der die herausnehmbare Klinge (20) auf dem ersten Profilteil (1) angeordnet werden kann, und einer geschlossenen Position, in der die herausnehmbare Klinge (20) zwischen dem ersten Profilteil (1) und dem verschiebbaren Element (14) gehalten wird, bewegt werden kann.

5. Werkzeug nach Anspruch 4, **dadurch gekennzeichnet, dass** das zweite Profilteil außerdem Arretierungsmittel (10) umfasst, die von einem Benutzer betätigt werden können, um das verschiebbare Element in seiner geschlossenen Position zu arretieren.

6. Werkzeug nach einem der Ansprüche 4 und 5, **dadurch gekennzeichnet, dass** das erste Profilteil erste Rückhaltemittel (5) umfasst, die mit zweiten Rückhaltemitteln (22), die auf der herausnehmbaren Klinge (20) vorliegen, zusammenwirken, um die herausnehmbare Klinge (20) auf dem ersten Profilteil zu positionieren, wenn das verschiebbare Element (14) des zweiten Profilteils sich in seiner geöffneten Position befindet.

7. Herausnehmbare Klinge (106; 20), die zum Ausstatten eines Werkzeugs, insbesondere eines Stemmeisens, nach einem der Ansprüche 1 bis 6 bestimmt ist.

8. Herausnehmbare Klinge (106; 20) nach Anspruch 7, **dadurch gekennzeichnet, dass** sie eine Ausbauchung (25) umfasst, die dazu angepasst ist, jegliche Materialspäne daran zu hindern, zwischen die herausnehmbare Klinge (20) und das erste und/oder das zweite Profilteil einzudringen.
